# EUROPÄISCHE PATENTSCHRIFT

(11) **EP 0 570 777 B1**
(45) Veröffentlichungstag und Bekanntmachung des Hinweises auf die Patenterteilung: **26.06.1996**
(21) Anmeldenummer: 93107415.7
(22) Anmeldetag: 07.05.1993
(51) Int. Cl.: B29C 45/18, B65G 53/56

(54) **Kunststoff-Wechseleinrichtung**
Plastic changing apparatus
Dispositif de changement de matière plastique

(30) Priorität: 16.05.1992 DE 4216312
(43) Veröffentlichungstag der Anmeldung: 24.11.1993
(73) Patentinhaber: Hehl, Karl, D-72290 Lossburg (DE)
(72) Erfinder: Hehl, Karl, D-72290 Lossburg (DE)
(74) Vertreter: Reinhardt, Harry

(56) Entgegenhaltungen:
- EP-A- 0 200 962
- EP-A- 0 471 895
- GB-A- 1 369 744
- GB-A- 2 112 506

## Beschreibung

Die Erfindung bezieht sich auf eine Kunststoff-Wechseleinrichtung entsprechend dem Oberbegriff des Patentanspruches 1. Die Kunststoff-Wechseleinrichtung wird im folgenden vereinfacht als Wechseleinrichtung bezeichnet.

Bei einer bekannten Wechseleinrichtung dieser Art (DE-OS 36 05 219) sind mehrere Versorgungsleitungen nebeneinander auf einer sich quer zur Spritzachse der Spritzgießmaschine erstreckenden Führungsschiene angeordnet, über die wahlweise Kunststoffmaterial oder Reinigungsmaterialien der Spritzgießeinheit zugeführt werden. Die einzelnen Versorgungsleitungen werden wechselweise über eine Kugelrollspindel, die an einer Verschiebeplatte angreift, die ihrerseits die Versorgungsleitungen trägt, mit der Zuführöffnung des Trägerblocks in Übereinstimmung gebracht. Senkrecht zum im Trägerblock angeordneten Fallschacht sind dabei Sperrschieber dadurch ansteuerbar, daß sie bei der Querverschiebung mit einem Kupplungselement in Eingriff gebracht werden. Durch die für die Versorgung erforderliche Querverschiebung der Versorgungsleitungen und die senkrecht dazu erfolgende Verschiebung der Sperrschieber ist jedoch ein großer Raum über der Maschine für die Versorgungseinrichtungen freizuhalten, der durch die dabei erforderlichen flexiblen Zuführleitungen noch erhöht wird.

Aus der DE-PS 38 10 732 ist es ferner bekannt, bei einer mit der vorgenannten Wechseleinrichtung vergleichbaren Wechseleinrichtung die Querverschiebung der Versorgungsanschlüsse mit miteinander verbundenen Hydraulikzylindern zu bewerkstelligen, was die Erreichung der End- und Zwischenstellungen vereinfacht. Gesonderte Hydraulikeinrichtungen im Bereich der Wechseleinrichtung sind zudem aus der DE-PS 38 22 926 bekannt.

Die Versorgung durch Versorgungsleitungen kann beispielsweise über einen das Kunststoffmaterial transportierenden Luftstrom mittels einer Dosiervorrichtung erfolgen, wie sie z.B. aus der DE-PS 24 09 128 bekannt ist. Es ist jedoch auch möglich, radial um den Zuführschacht verschiedene Versorgungsbehälter anzuordnen, wie beispielsweise aus der DE-PS 30 46 387 bekannt ist.

Ausgehend von diesem Stand der Technik liegt der Erfindung die Aufgabe zugrunde, eine Wechseleinrichtung der eingangs genannten Gattung derart weiterzubilden, daß auf platzsparende Weise mehrere Anschlüsse für verschiedene Materialien gemeinsam an einer Wechseleinrichtung angeordnet werden können, wobei zugleich der Platzbedarf für den Verschluß der einzelnen Versorgungsleitungen minimiert wird.

Diese Aufgabe wird durch die im Kennzeichen des Patentanspruches 1 genannten Merkmale gelöst.

Bei dieser Ausbildung sind nach außen keine beweglichen Teile an der Wechseleinrichtung mehr zu erkennen. Vielmehr bleibt die Wechseleinrichtung stets in einem festen, hinsichtlich ihres Raumbedarfs berechenbaren Zustand. Die Sperrschieber befinden sich dabei im Innern der Wechseleinrichtung, so daß auch ggf. mögliche Klemmstellen sicher vermieden werden können. Die Anordnung der Sperrschieber um eine zentrale Zuführöffnung schafft dabei die baulichen Voraussetzungen für eine einfache und platzsparende Schiebersteuerung, während die radiale Anordnung der Anschlußbohrungen den Anschluß der einzelnen Versorgungsleitungen erheblich vereinfacht, da dieser nun in einem Raum durchgeführt werden kann, in dem grundsätzlich die Spritzgießeinheit kein Hindernis darstellt.

Bei einer Ausbildung nach den Ansprüchen 2 und 3 werden die bereits genannten Voraussetzungen für einen einfachen Aufbau der Steuerung weiter verbessert. Zudem ergibt sich gerade bei dieser Ausbildung eine zentrische symmetrische Belastung der gesamten Spritzgießeinheit, was insbesondere bei einer zyklisch arbeitenden Maschine wesentlich ist.

Eine Ausbildung nach Anspruch 4 erleichtert erheblich die Wartungsfreundlichkeit, da der gesamte Schiebermechanismus leicht von der Spritzgießeinheit abnehmbar ist ohne daß es weiterer Aus- und Umbauten bedarf.

Grundsätzlich wird der Schiebemechanismus bei einer Ausbildung nach den Ansprüchen 5-6 rein elektrisch betrieben, so daß gesonderte Hydraulikeinrichtungen nicht vorgesehen werden müssen. Vielmehr kann der gesamte steuerungstechnisch zu treibende Aufwand innerhalb des Schutzgehäuses untergebracht werden. Zu diesem Zweck werden verschiedene Arbeitsplatten im Gehäuse vorgesehen, die zugleich Trag- und Stützfunktion für die Sperrschieber besitzen. Durch den Einsatz von Magneten, die jedem Sperrschieber zugeordnet sind, können ganz gezielt einzelne oder auch mehrere Sperrschieber gleichzeitig gezogen werden, so daß auch ein Mischen verschiedener Materialien problemlos möglich ist. Kommt es dabei zu Störungen in einem Materialschacht, so kann problemlos auf einen zweiten Materialschacht übergegangen werden, was die Betriebsausfallzeiten verringert. Dabei sind die Magneten so geschaltet, daß ohne Strom stets keine Ankupplung an den Sperrschiebern auftritt.

Bei einer Ausbildung nach Anspruch 8 wird ergänzend die Stellung der Sperrschieber erfaßt, was jedoch auch bereits durch entsprechende Anschläge der Trägerplatte sichergestellt werden kann. Grundsätzlich wäre es auch möglich, die Sollwinkelstellung der Gewindespindel zu erfassen, jedoch wäre dazu ein größerer steuerungstechnischer Aufwand erforderlich.

Weitere Vorteile ergeben sich aus den Unteransprüchen. Im folgenden wird die Erfindung in einem Ausführungsbeispiel anhand der Zeichnungen erläutert.
Es zeigen:
- Fig. 1: eine Seitenansicht einer mit einer Kunststoff-Wechseleinrichtung ausgestatteten Spritzgießeinheit,
- Fig. 2: eine Aufsicht auf die Kunststoff-Wechseleinrichtung bei einem horizontalen Schnitt durch das Schutzgehäuse, wobei auch die Zwischenplatte 21 und die Motorträgerplatte 18 teilweise ausgeschnitten sind,
- Fig. 3, 4: einen vertikalen Schnitt durch die Symmetrieebene der Wechseleinrichtung bei vollständig geschlossenem und vollständig geöffnetem Sperrschieber,
- Fig. 5: eine dreidimensionale, teilweise geschnittene Darstellung von Konuseinsatz mit Sperrschiebern und beweglicher Trägerplatte.

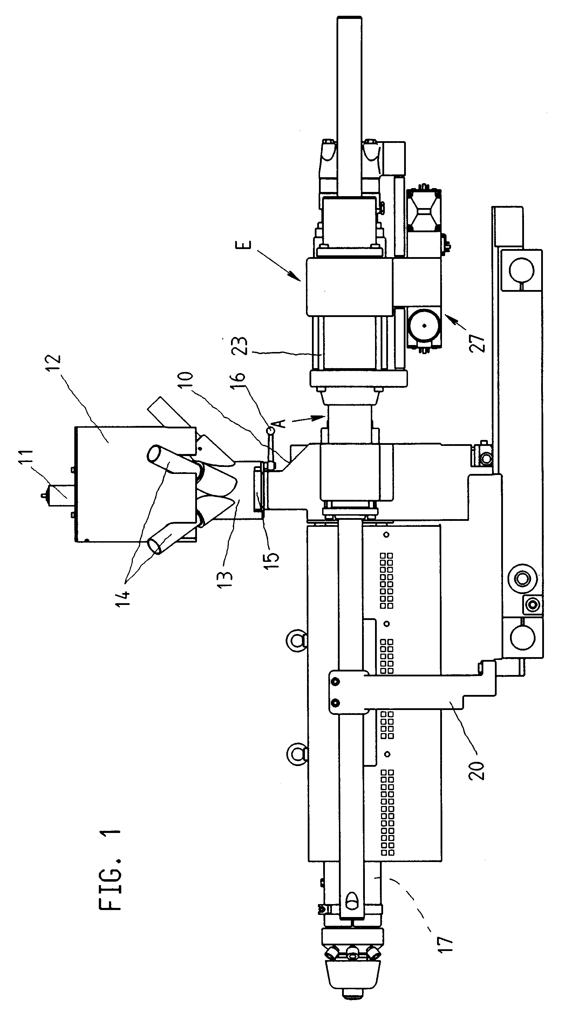

Wie aus Fig. 1 ersichtlich, ist die Wechseleinrichtung am Trägerblock einer Spritzgießeinheit einer Kunststoff-Spritzgießmaschine angeordnet. Die Spritzgießeinheit stützt sich über ein Trägerelement 20 auf dem Maschinenfuß der Spritzgießmaschine ab. Dabei wird der Plastifizierzylinder in einem Tragskelett über Skelettelemente gehalten. Über Antriebszylinder A wird die Spritzgießeinheit bewegt und über Einspritz-zylinder E ist zudem eine Bewegung der im Plastifizierzylinder 17 angeordneten Förderschnecke möglich. Antriebszylinder A und Einspritzzylinder E, die über Hydraulikventile hydraulisch gesteuert sind, sind in einem Trägerblock 10 gehalten, der zugleich der Versorgung des Plastifizierzylinders mit Kunststoffmaterial dient. Zu diesem Zweck besitzt der Trägerblock eine Zuführöffnung 10a, an die eine Kunststoff-Wechseleinrichtung angeschlossen werden kann. Ferner ist im Trägerblock 10 der Plastifizierzylinder 17 rückseitig gehalten und kann vom Trägerblock durch einen Freisetzungshub freigesetzt und anschließend ausgewechselt werden.

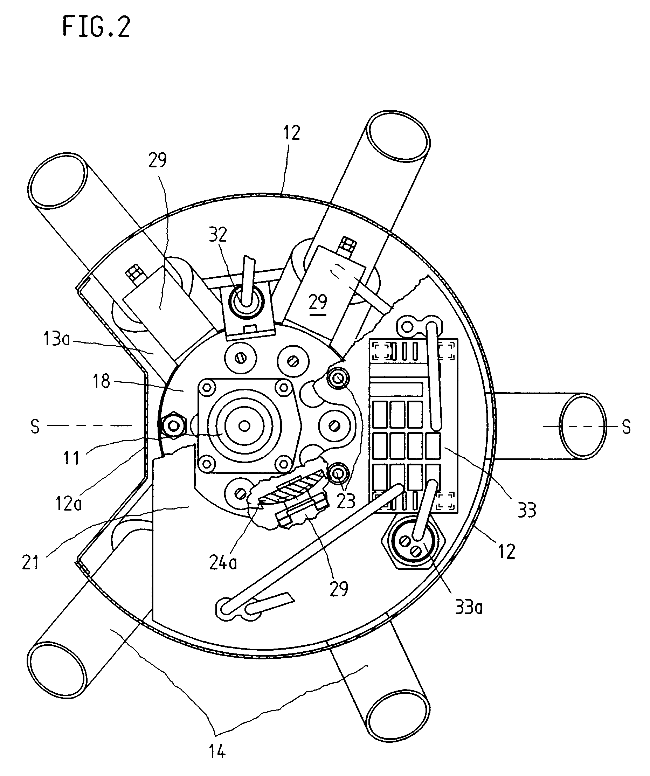

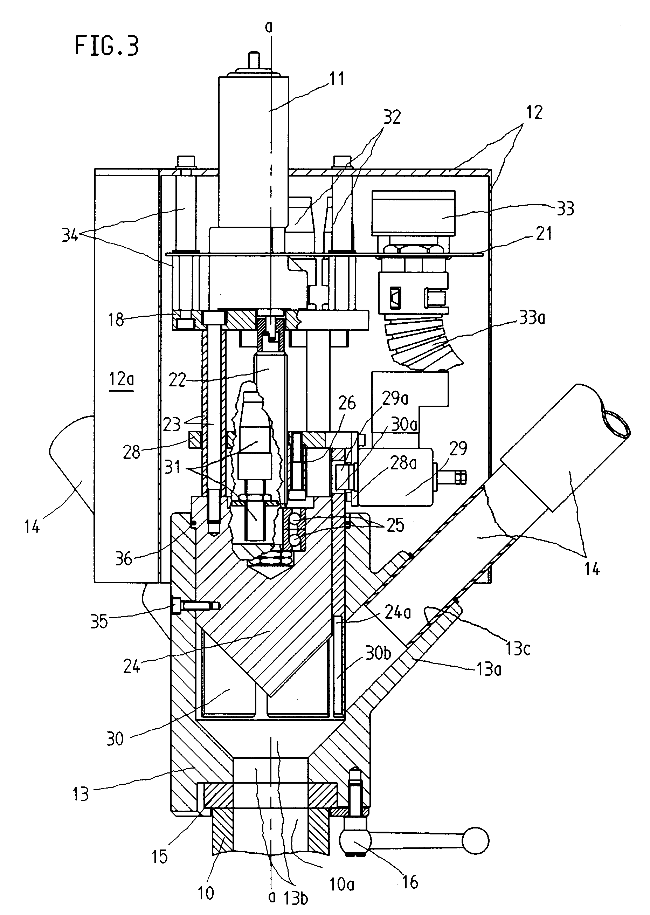

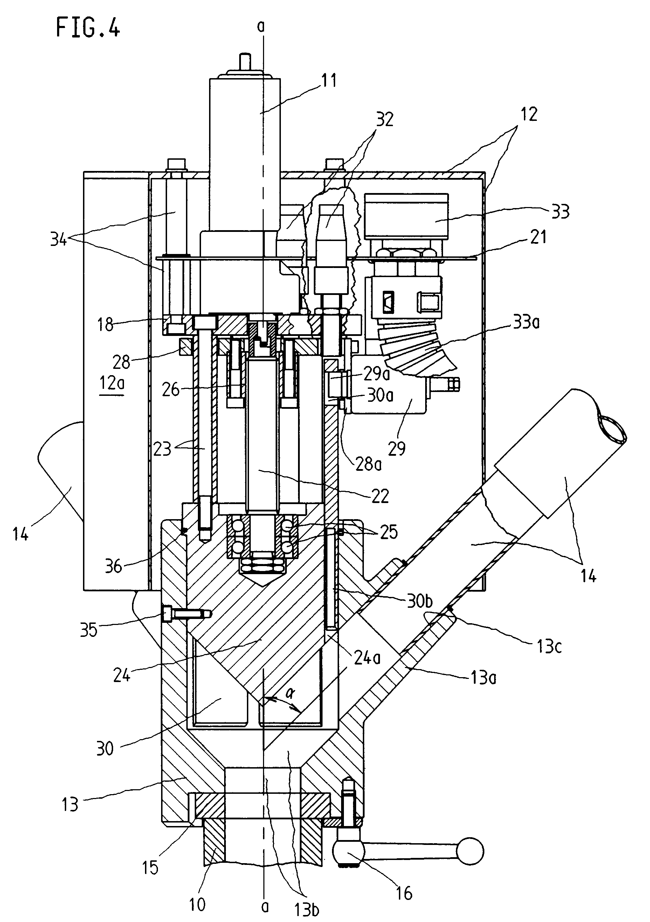

Die Wechseleinrichtung besitzt mehrere, durch getrennt ansteuerbare Sperrschieber 30 quer verschließbare Anschlußbohrungen 13c für den wahlweisen Anschluß von Versorgungsleitungen, die im Ausführungsbeispiel als Zuführschläuche 14 ausgebildet sind. Statt dieser Schläuche können selbstverständlich auch stationäre Versorgungsbehälter eingesetzt werden. Über die Versorgungsleitungen wird Kunststoffmaterial oder Reinigungsmaterial der Spritzgießeinheit zugeführt. Selbstverständlich ist die Wechseleinrichtung jedoch auch für die Zufuhr anderer Materialien, wie z.B. für pulverförmige Materialien beispielsweise für Keramik-Spritzguß geeignet. Die Anschlußbohrungen befinden sich stationär an einem Grundkörper 13 der Wechseleinrichtung, der abnehmbar mit dem Trägerblock verbunden ist. Die Anschlußbohrungen 13c sind radial um die zentrale Zuführöffnung 10a des Trägerblockes angeordnet. Im Ruhezustand begrenzen die Sperrschieber 30 zumindest teilweise die Zuführöffnung. Wie sich dabei aus den Fign. 3 und 4 ergibt, ist dieses Begrenzen so zu verstehen, daß die Vertikalprojektion der Sperrschieber die Zuführöffnung "einrahmt". Die Sperrschieber 30 sind konzentrisch um und parallel zur Achse a-a der als Sammelschacht 13b des Grundkörpers 13 ausgebildeten Zuführöffnung gelegen, wobei die Zuführöffnung des Grundkörpers mit der Zuführöffnung 10a des Trägerblocks kongruent ist. Die Anschlußbohrungen liegen quer zur Achse von Zuführschächten 13a des Grundkörpers 13, die einen Winkel α zur Achse a-a des Sammelschachtes 13b einschließen. Sowohl die KunststoffWechseleinrichtung an sich als auch die Zuführschläuche 14 sind symmetrisch zu einer durch die Spritzachse s-s gehenden vertikalen Ebene der Spritzgießeinheit angeordnet (Fig. 2).

Wie aus Fig. 3 ersichtlich, ist in einer zentrischen Öffnung des Grundkörpers ein Konuseinsatz 24 eingefügt, der dort über Verbindungsbolzen 35 festgelegt ist. Dieser Konuseinsatz begrenzt den Sammelschacht 13b nach oben und stellt zugleich eine Führung für das durch den Schacht 13a zugeführte Material dar. Der Konuseinsatz 24 besitzt an seinem Umfang Führungen 24a für die Sperrschieber 30 und kann als bauliche Einheit zusammen mit den Sperrschiebern, einem aus Spindel 22 und Mutter 26 bestehenden Spindelantrieb und der beweglichen Trägerplatte 28 aus der Wechseleinheit entnommen werden, was insbesondere die Wartungsfreundlichkeit der Wechseleinrichtung erhöht. Der Konuseinsatz 24 besitzt an seiner Oberseite Stehbolzen 23, die eine Motorträgerplatte tragen und die bewegliche Trägerplatte 28 führen. Die Trägerplatte 28 ist ihrerseits mit der Mutter 26 verbunden - selbstverständlich könnte sie auch einstückig mit der Mutter sein - die mit einer über einen Motor 11 rotierbaren Spindel 22 zusammenwirkt. Die Spindel 22 ist im Konuseinsatz 24 über Lager 25 gelagert. Durch Rotation der Spindel bewegt sich die bewegliche Trägerplatte im Schutzgehäuse 12 auf und ab. Am Umfang der beweglichen Trägerplatte 28 sind einzeln ansteuerbare Magneten 29 angeordnet, die durch elektrische Induktion einen Bolzen 29a bewegen. Bei Schaltung des Magnets 29 kann somit der Bolzen 29a in eine Steueröffnung 30a der Sperrschieber 30 eingesteuert werden. Zu diesem Zweck ist daher jedem Sperrschieber 30 ein Magnet 29 zugeordnet. Wie aus den Fign. 3 und 4 ersichtlich, sind die Magnete 29 radial um die bewegliche Trägerplatte 28 angeordnet, so daß bei Erregung der Bolzen 29a radial nach innen in Kupplungsstellung überführt werden kann. Je nachdem, welche Magnete 29 gleichzeitig angesteuert werden, ist es auch möglich, einen oder mehrere Schieber gleichzeitig zu kuppeln.

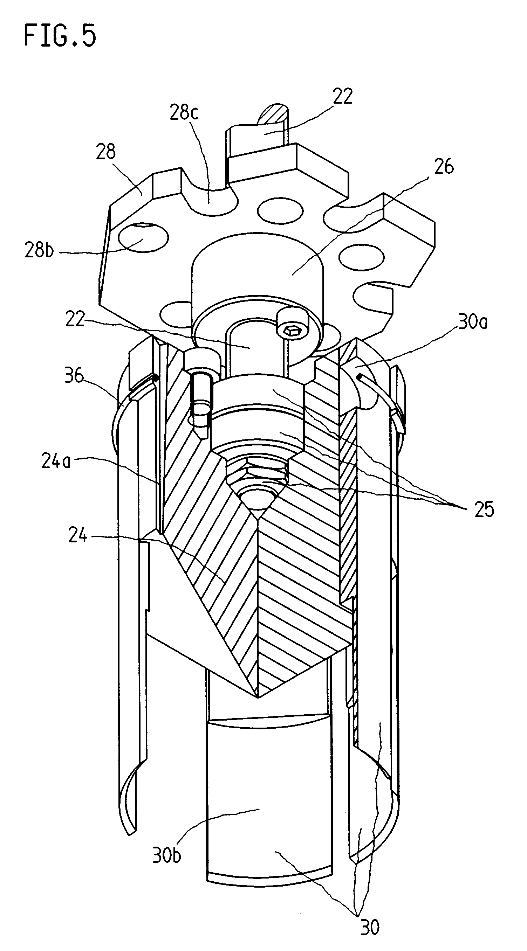

Wie aus Fig. 5 ersichtlich, sind die Sperrschieber 30 im ausgebauten Zustand des Konuseinsatzes 24 über einen Montagering an dem Konuseinsatz befestigt. Die bewegliche Trägerplatte besitzt Bohrungen, die als Führung 28b dienen und im eingebauten Zustand von den Stehbolzen 23 durchgriffen werden. Ferner sind im Umfangsbereich der beweglichen Trägerplatte Öffnungen 28c vorgesehen, die von Endschaltern 32 durchgriffen werden, die die geöffnete Stellung der einzelnen Schieber 30 überwachen. In Fig. 3 ist der einzige Endschalter 31 dargestellt, der die Stellung der Sperrschieber 30 im geschlossenen Zustand anzeigt.

Auf der Motorträgerplatte 18 stützt sich über Bolzen 34 eine weitere Zwischenplatte 21 ab, die insbesondere die Verteilerplatte 33 trägt. Die Verteilerplatte 33 ist über eine Anschlußleitung mit der Steuerung der Spritzgießmaschine verbunden und ist auf der Zwischenplatte so angeordnet, daß sie sich innerhalb des Schutzgehäuses 12 befindet.

Wie aus Fig. 2 ersichtlich, besitzt das Schutzgehäuse 12 eine Einbuchtung 12a, die insbesondere dafür vorgesehen ist, einen Wechsel des 'nackten' Platifizierzylinders 17 zu ermöglichen, wie es z.B. aus der DE-PS 36 26 647 bekannt ist. Aus dieser Figur ist aber auch ersichtlich, daß die Querschnittsform der Sperrschieber 30 grundsätzlich kreissegmentförmig ist. Im eigentlichen Sperrbereich 30b, wie er z.B. aus Fig. 3 ersichtlich ist, wird hingegen der Querschnitt auf einen Kreisbogen minimiert. Diese Form ermöglicht einen sicheren und schnellen Verschluß des Zuführschachtes 13a, da durch diese Form ein schnelleres Eindringen in das anstehende Material erleichtert wird. Außerdem ist die Belastung bei gleicher Materialstärke gleichmäßig verteilt. Aufgrund des quer verlaufenden Verschließens kommt es zudem zu weniger Störungen infolge von störenden Granulatkörnern als bei den bekannten, den Zuführschacht senkrecht verschließenden Sperrschiebern, da die Körner vor einem Zerdrücken ausweichen können.

Die gesamte Wechseleinrichtung kann vom Trägerblock 10 abgenommen werden. Zu diesem Zweck umgreift der Grundkörper eine Führungsleiste 15 am Kopf des Trägerblockes 10. In Anschlußstellung ist die Wechselein-richtung über ein Verriegelungselement 16 in Zuführposition festlegbar. Die Magnete 29 sind über Halterungen 28a der beweglichen Trägerplatte 28 gehalten.

## Patentansprüche

1. Kunststoff-Wechseleinrichtung an einer Kunststoff-Spritzgießeinheit mit mehreren, durch getrennt ansteuerbare Sperrschieber (30) quer verschließbaren Anschlußbohrungen (13c) für den wahlweisen Anschluß von Versorgungsleitungen, durch die Material aus Vorratsbehältern der Spritzgießeinheit über eine Zuführöffnung (10a) zugeführt wird,
dadurch gekennzeichnet, daß die Anschlußbohrungen (13c) an einem Grundkörper (13) der Wechseleinrichtung radial um die Zuführöffnung (10a) angeordnet sind, wobei die Zuführöffnung je nach Betriebsstellung der Sperrschieber (30) zumindest teilweise von den Sperrschiebern umrandet ist.

2. Wechseleinrichtung nach Anspruch 1, dadurch gekennzeichnet, daß die vertikal angeordneten Sperrschieber (30) konzentrisch um und parallel zur Achse (a-a) einer als Sammelschacht (13b) des Grundkörpers (13) ausgebildeten Zuführöffnung gelegen sind, die mit der Zuführöffnung (10a) des Trägerblocks (10) kongruent ist.

3. Wechseleinrichtung nach Anspruch 1 oder 2, dadurch gekennzeichnet, daß als Versorgungsleitungen ausgebildete Zuführschläuche (14) über die Anschlußbohrungen (13c) an Zuführschächten (13a) anschließen, die einen Winkel (α) zur Achse (a-a) des Sammelschachtes (13b) einschließen und daß sowohl die Zuführschächte als auch die Wechseleinrichtung an sich symmetrisch zu einer durch die Spritzachse (s-s) gehenden vertikalen Ebene angeordnet sind.

4. Wechseleinrichtung nach einem der vorhergehenden Ansprüche, dadurch gekennzeichnet, daß der Sammelschacht (13b) nach oben durch einen in den Grundkörper (13) einfügbaren Konuseinsatz (24) verschlossen ist, der an seinem Umfang Führungen (24a) für die Sperrschieber (30) besitzt.

5. Wechseleinrichtung nach einem der vorhergehenden Ansprüche, dadurch gekennzeichnet, daß der Konuseinsatz (24) an seiner Oberseite Stehbolzen (23) aufweist, die eine Trägerplatte (Motorträgerplatte 18) tragen und eine weitere bewegliche Trägerplatte (28) führen, mit der ein oder mehrere Sperrschieber (30) kuppelbar sind.

6. Wechseleinrichtung nach Anspruch 5, dadurch gekennzeichnet, daß die weitere Trägerplatte (28) mit einer Mutter (26) verbunden ist, die mit einer über einen auf der als Motorträgerplatte (18) ausgebildeten Trägerplatte angeordneten Motor (11) rotierbaren Spindel (22) zusammenwirkt, die im Konuseinsatz (24) gelagert ist, wobei jedem Sperrschieber (30) je ein an der beweglichen Trägerplatte (28) angeordneter Magnet (29) zugeordnet ist, der bedarfsweise einen Bolzen (29a) erregt, der in eine Steueröffnung (30a) der Sperrschieber einsteuerbar ist.

7. Wechseleinrichtung nach Anspruch 5 oder 6, dadurch gekennzeichnet, daß die Motorträgerplatte (18) ihrerseits Bolzen (34) trägt, an denen das Schutzgehäuse (12) und eine Zwischenplatte (21) abgestützt sind, die weitere Versorgungselemente (Verteilerplatte 33) aufnimmt.

8. Wechseleinrichtung nach einem der Ansprüche 4-7, dadurch gekennzeichnet, daß am Konuseinsatz (24) ein die geschlossene Stellung der Sperrschieber (30) anzeigender Endschalter (31) vorgesehen ist und daß an der Motorträgerplatte (18) jedem Sperrschieber (30) zugeordnete, den geöffneten Zustand anzeigende Endschalter (32) vorgesehen sind.

9. Wechseleinrichtung nach einem der vorhergehenden Ansprüche, dadurch gekennzeichnet, daß die im Querschnitt kreisegementförmigen Sperrschieber (30) im eigentlichen Sperrbereich (30b) im Querschnitt auf einen Kreisbogen minimiert sind.

10. Wechseleinrichtung nach einem der vorhergehenden Ansprüche, dadurch gekennzeichnet, daß am Trägerblock (10) eine Führungsschiene (15), die mit dem Grundkörper (13) der abnehmbaren Wechseleinrichtung in Eingriff steht, und ein Verriegelungselement (16) zur Verriegelung der Wechseleinrichtung mit dem Trägerblock (10) vorgesehen ist.

## Claims

1. Plastics changing apparatus on an injection moulding unit having a plurality of connecting bores (13c) which are transversally lockable by separately controllable stop slides (30) for the optional connection of supply lines, through which material from storage containers of the injection moulding unit is supplied via a feed opening (10a)
characterised in that the connecting bores (13c) are disposed at a basic body (13) of the changing apparatus radially around the feed opening (10a), the feed opening being bordered at least partially by the stop slides according to the operating position of the stop slides (30).

2. Changing apparatus according to claim 1, characterised in that the vertically disposed stop slides (30) are arranged concentrically around and parallel to the axis (a-a) of a feed opening which is configured as a collecting shaft (13b) of the basic body (13) and is congruent with the feed opening (10a) of the carrier block (10).

3. Changing apparatus according to claim 1 or 2, characterised in that supply hoses (14), which are configured as supply lines, are connected to feed shafts (13a) by means of connecting bores (13c), and these include an angle (α) to the axis (a-a) of the collecting shaft (13b) and in that both the feed shafts and the changing apparatus are disposed symmetrically with respect to a vertical plane that extends through the injection axis (s-s).

4. Changing apparatus according to one of the preceding claims, characterised in that the collecting shaft (13b) is closed at its top by a conical insert piece (24) which can be inserted into the basic body (13) and has guiding means (24a) for the stop slides (30) at its periphery.

5. Changing apparatus according to one of the preceding claims, characterised in that the conical insert piece (24) has stay bolts (23) on its upper surface, which stay bolts support a carrier plate (motor carrier plate 18) and guide a further movable carrier plate (28), with which one or several stop slides (30) can be coupled.

6. Changing apparatus according to claim 5, characterised in that the additional carrier plate (28) is connected to a nut (26) which interacts with a rotatable spindle (22) via a motor (11) which is disposed on the carrier plate, which itself is configured as motor carrier plate (18), the spindle (22) being located in the conical insert piece (24), each stop slide (30) being associated with a magnet (29) which is disposed on the movable carrier plate (28), which magnet, in case of need, engages a stud (29a) which is controllable into a control opening (30a) of the stop slides.

7. Changing apparatus according to claim 5 or 6, characterised in that the motor carrier plate (18) in its turn bears bolts (34) on which the protective housing (12) and an intermediate plate (21) are supported, the latter accepting the additional supply elements (distributor plate 33).

8. Changing apparatus according to one of the claims 4 - 7, characterised in that one limit stop switch (31) indicating the closed position of the stop slides (30) is provided on the conical insert piece (24) and in that limit stop switches (32) indicating the open position are provided on the motor carrier plate (18) assigned to each stop slide (30).

9. Changing apparatus according to one of the preceding claims, characterised in that the stop slides (30), which are shaped as a segment of a circle in cross section, are minimised to an arc of a circle in their own stopping area (30b) in cross section.

10. Changing apparatus according to one of the preceding claims, characterised in that a guide rail (15), which engages with the basic body (13) of the removable changing apparatus, and a locking element (16) for locking the changing apparatus with the carrier block (10) are provided on the carrier block (10).

## Revendications

1. Dispositif de changement de matière plastique sur une unité d'injection de matière plastique, comprenant plusieurs orifices de raccordement (13c), susceptibles d'être obturés transversalement par des registres d'arrêt (30) pouvant être commandés séparément, pour le raccordement sélectif de canalisations d'alimentation par lesquelles de la matière provenant de réservoirs d'alimentation est amenée à l'unité d'injection à travers une ouverture d'amenée (10a),
caractérisé en ce que les orifices de raccordement (13c) sont disposés radialement autour de l'ouverture d'amenée (10a) sur un corps de base (13) du dispositif de changement, l'ouverture d'amenée étant bordée au moins partiellement par les registres d'arrêt, suivant la position de service occupé par les registres d'arrêt (30).

2. Dispositif de changement selon la revendication 1, caractérisé en ce que les registres d'arrêt (30), orientés verticalement, sont placés concentriquement autour et parallèlement à l'axe (a-a) d'une ouverture d'amenée réalisée comme un puits collecteur (13b) du corps de base (13) et coïncidant avec l'ouverture d'amenée (10a) du bloc support (10).

3. Dispositif de changement selon la revendication 1 ou 2, caractérisé en ce que des flexibles d'amenée (14), constituant des canalisations d'alimentation, se raccordent par les orifices de raccordement (13c) à des puits d'amenée (13a) qui renferment un angle (α) avec l'axe (a-a) du puits collecteur (13b) et qu'à la fois les puits d'amenée et le dispositif de changement lui-même sont disposés symétriquement par rapport à un plan vertical passant par l'axe d'injection (s-s).

4. Dispositif de changement selon une des revendications précédentes, caractérisé en ce que le puits collecteur (13b) est fermé en haut par un insert conique (24) qui peut être introduit dans le corps de base (13) et dont le pourtour possède des guides (24a) pour les registres d'arrêt (30).

5. Dispositif de changement selon une des revendications précédentes, caractérisé en ce que le dessus de l'insert conique (24) porte des tiges/vis (23) qui supportent une plaque support (plaque porte-moteur 18) et guident une plaque support supplémentaire mobile (28) à laquelle sont accouplables un ou plusieurs registres d'arrêt (30).

6. Dispositif de changement selon la revendication 5, caractérisé en ce que la plaque support supplémentaire (28) est solidarisée avec un écrou (26) qui coopère avec une broche filetée (22) susceptible d'être tournée par un moteur (11) placé sur la plaque support constituant la plaque porte-moteur (18), la broche filetée (22) étant montée rotative dans l'insert conique (24), avec coordination à chaque registre d'arrêt (30) d'un électroaimant (29) disposé sur la plaque support mobile (28) et capable, lorsqu'il est excité en cas de besoin, de faire pénétrer une tige (29a) dans une ouverture de commande (30a) du registre d'arrêt correspondant.

7. Dispositif de changement selon la revendication 5 ou 6, caractérisé en ce que la plaque porte-moteur (18) porte elle-même des tirants ou vis d'assemblage (34) sur lesquels sont appuyés le carter protecteur (12) et une plaque intermédiaire (21) recevant d'autres éléments d'alimentation (plaque de distribution 33).

8. Dispositif de changement selon une des revendications 4-7, caractérisé en ce qu'un interrupteur de fin de course (31) indiquant la position fermée des registres d'arrêt (30) est prévu sur l'insert conique (24), et que des interrupteurs de fin de course (32), coordonnés chacun a un registre d'arrêt (30) et indiquant l'état ouvert du registre, sont prévus sur la plaque porte-moteur (18).

9. Dispositif de changement selon une des revendications précédentes, caractérisé en ce que les registres d'arrêt (30), ayant une forme en segment de cercle en section droite, sont réduits à une section minimale en forme d'arc de cercle dans la zone d'obturation proprement dite (30b).

10. Dispositif de changement selon une des revendications précédentes, caractérisé en ce que, sur le bloc support (10), un a prévu un rail de guidage (15) qui est en prise avec le corps de base (13) du dispositif de changement amovible, de même qu'un élément de verrouillage (16) pour verrouiller le dispositif de changement sur le bloc support (10).
